# EUROPÄISCHE PATENTSCHRIFT

(11) **EP 2 294 310 B1**
(45) Veröffentlichungstag und Bekanntmachung des Hinweises auf die Patenterteilung: **15.06.2016**
(21) Anmeldenummer: 09769070.5
(22) Anmeldetag: 29.04.2009
(51) Int. Cl.: F02N 11/08

(54) **ASSISTENZSYSTEM FÜR EIN KRAFTFAHRZEUG, VERFAHREN UND DATENTRÄGER DAZU**
ASSISTANCE SYSTEM FOR A MOTOR VEHICLE, METHOD AND DATA CARRIER THEREFOR
SYSTÈME D'ASSISTANCE POUR UN VÉHICULE AUTOMOBILE, PROCÉDÉ ET SUPPORT DE DONNÉES CORRESPONDANTS

(30) Priorität: 26.06.2008 DE 102008002694
(43) Veröffentlichungstag der Anmeldung: 16.03.2011
(73) Patentinhaber: Robert Bosch GmbH, 70442 Stuttgart (DE)
(72) Erfinder: RYCHLAK, Stefan, 31241 Ilsede (DE)
(86) Internationale Anmeldenummer: PCT/EP2009/055171
(87) Internationale Veröffentlichungsnummer: WO 2009/156221

(56) Entgegenhaltungen:
- EP-A- 1 283 121
- DE-A1- 19 749 582
- DE-A1-102006 052 418
- US-A- 5 619 412

## Beschreibung

### Stand der Technik

Die Erfindung geht von einem Assistenzsystem für ein Kraftfahrzeug mit Mitteln zur Erzeugung eines Signals in Abhängigkeit eines aktuellen Fahrzeugstandorts relativ zu einem Ort auf einer von dem Fahrzeug befahrenen Route, sowie einem Verfahren und einem Datenträger dazu nach der Gattung der unabhängigen Patentansprüche aus.

Aus beispielsweise EP 1 721 127 B1 ist ein Fahrzeugnavigationssystem bekannt, das nach Eingabe eines Ziels durch den Benutzer bzw. Fahrzeugführer und Bestimmung einer aktuellen Fahrzeugposition mittels Positionsbestimmungsmitteln eine Route vom aktuellen Standort zum eingegeben Ziel ermittelt und den Benutzer entlang dieser Route führt. Dazu wird regelmäßig die aktuelle Fahrzeugposition ermittelt und mit der berechneten Route abgeglichen und für den Fall, dass ein Fahrmanöver, wie etwa ein Abbiegevorgang zum Befolgen der Route erforderlich wird, ein entsprechender Hinweis an den Benutzer ausgegeben.

Aus EP 1 593 937 A1 ist weiter ein Navigationssystem für Kraftfahrzeuge bekannt, welches eine Route von einem Ausgangs- zu einem Zielpunkt bestimmt, wobei bei der Routenbestimmung ein Faktor berücksichtigt wird, der den Energieverbrauch und damit auch den Schadstoffausstoß beim Zurücklegen der Route beeinflusst. Ziel ist dabei eine möglichst energiesparende Route. Dazu werden insbesondere Steigungs- und Gefällestrecken sowie eine Beladung des Fahrzeugs berücksichtigt. Weiter werden auch die Arten von Straßen, insbesondere Straßenklasse wie Landstraße oder Autobahn sowie die Straßenverhältnisse berücksichtigt. Weiter werden bekannte Unfall- und Stauschwerpunkte berücksichtigt.

Aus der DE 197 49 582 A1 ist ein Assistenzsystem für ein Fahrzeug bekannt, das mit GPS-Empfänger zusammenwirkt. Der GPS-Empfänger ermöglicht es, zusammen mit einer digitalen Straßenkarte, die dem aktuellen Fahrzeugstandort zugeordnet sind, zu ermitteln. Dabei ist die Arbeitsweise des Assistenzsystems dahingehend zu beschreiben, dass, wenn das Fahrzeug einen Ort des Straßennetzes, nämlich eine Verkehrsampel erreicht, dem in der digitalen Straßenkarte eine bestimmte Stillstandsdauer (Länge der entsprechenden Ampelphase) zugeordnet ist, ermittelt wird, wie lange der Stillstand dauern wird. Ist der ermittelte Stillstand länger als ein bestimmter Schwellwert, so wird ein Signal zum Abstellen der Zündung der Antriebsmaschine erzeugt.

Die US-PS 5,619,412 betrifft ein System für den Fernzugriff auf ein Motorsteuerungssystem und zum selektiven Steuern und Ändern eines bestehenden Motoralgorithmus'. In einer bevorzugten Ausführungsform umfasst das System ein bordeigenes Fahrzeugkommunikationssystem, das Daten von einer räumlich abgesetzten zentralen, ortsfesten Basisstelle empfängt und an eine räumlich abgesetzte zentrale, ortsfeste Basisstelle sendet. Ein Lkw-Fahrer kontaktiert den Fuhrparkleiter über das bordeigene Kommunikationssystem und verlangt zum Beispiel, dass der Motor eine bestimmte Zeit im Leerlauf arbeitet. Der Fuhrparkleiter an der räumlich abgesetzten zentralen, ortsfesten Basisstelle sendet dann Daten von einem Computer über einen Kommunikationskanal an das bordeigene Kommunikationssystem des Fahrzeugs. Die Daten werden über eine Fernbefehlsschnittstellenvorrichtung gesendet, die die Daten in eine Sprache übersetzt, die von einer Motorsteuerungsvorrichtung verstanden werden kann. Auf der Grundlage der gesendeten Daten deaktiviert die Motorsteuerungsvorrichtung ein vorhandenes Leerlaufabschaltsystem und ermöglicht es dem Motor, eine durch den Lkw-Fuhrparkleiter vorgegebene Zeitdauer im Leerlauf zu arbeiten.

Ein aus der DE 10 2006 052 418 A bekanntes Verfahren zum Steuern einer mit einem elektronischen Steuermodul, versehenen Verdichtungsentflammungs-Brennkraftsmaschine, die in einem Fahrzeug vorgesehen ist, ermöglicht die Anpassung des Leerlaufbetriebs der Brennkraftmaschine an Anorderungen eines geographischen Ortes. Hierbei sind die Schritte Bestimmung, ob sich die Brennkraftmaschine im Leerlauf befindet,

Bestimmung, ob sich die Brennkraftmaschine an einem geographischen Ort befindet, bei welchem Einschränkungen in Bezug auf den Leerlaufbetrieb einer Brennkraftmaschine vorhanden sind, Bestimmung, ob die Leerlaufzeit der Brennkraftmaschine größer oder gleich der zulässigen Leerlaufzeit der Brennkraftmaschine an dem geographischen Ort ist, an welchem die Brennkraftmaschine arbeitet, und Abschalten der Brennkraftmaschine, wenn die Leerlaufzeit der Brennkraftmaschine die zulässige Leerlaufzeit an dem geographischen Ort überschreitet, an welchem die Brennkraftmaschine arbeitet, vorgesehen.

### Vorteile der Erfindung

Die Erfindung mit den Merkmalen der unabhängigen Patentansprüche bildet den vorgenannten Stand der Technik vorteilhaft weiter und unterstützt einen Fahrzeugführer bei einer ressourcen-, insbesondere energieschonenenden und schadstoffarmen Fahrweise, so dass eine Umweltbelastung reduziert wird.

Dazu ist es bei einem Assistenzsystem für ein Kraftfahrzeug vorgesehen, dass ein Signal zum Abstellen einer Antriebsmaschine erzeugt wird, wenn der Fahrzeugstandort einen Ort des Verkehrswegenetzes erreicht, dem eine Stillstandsdauer zugeordnet ist, die über einem bestimmten Schwellwert liegt. Die Zuordnung von Stillstandsdauern zu Orten ist in einem Speicher abgelegt. Im Falle eines Fahrzeugnavigationssystems als Assistenzsystems kann der Speicher vorteilhaft ein Speicher für eine digitale Karte sein oder ein zusätzlicher Speicher, wobei eine Zuordnung von Stillstandsdauern und Orten dann beispielsweise im zusätzlichen Speicher abgelegt ist. Erfindungsgemäß werden Stillstände des Fahrzeugs während Fahrten des Fahrzeugs, insbesondere an Kreuzungen, Einmündungen, Bahnübergängen, Lichtsignalanlagen bzw. Ampelanlagen und dergleichen, hinsichtlich Ort des Stillstands und Dauer des Stillstands erfasst und den Orten des Verkehrswegenetzes zugeordnete Stillstandsdauern unter Verwendung der erfassten Informationen aktualisiert. Auf diese Weise "lernt" das Assistenzsystem im Laufe der Zeit Wartezeiten an solchen, angefahrenen Orten kennen, die dann in der Folge als Anhaltspunkte für typische Wartezeiten an diesen Orten verwendet werden. Bei mehrfachem Anfahren derselben Stillstandsorte werden die ermittelten Warte- oder Stillstandszeiten nach an sich bekannten statistischen Methoden ausgewertet und daraus typische Stillstandszeiten ermittelt. Die den Orten zugeordneten Stillstandszeiten können dabei auch weiter differenziert werden, beispielsweise nach Tageszeit, also beispielsweise unterschiedliche Stillstandszeiten für Stoßzeiten und verkehrsarme Zeiten, oder Wochentag oder dergleichen mehr.

Vorteilhaft kann das Signal zur Information an den Fahrzeugführer ausgegeben werden, der dann in Reaktion auf das Signal die Antriebsmaschine abstellen kann. Alternativ oder ergänzend kann weiter vorgesehen sein, dass in Reaktion auf das Signal automatisch die Antriebsmaschine des Kraftfahrzeugs abgestellt wird.

Weiterhin können die Stillstandszeiten bei mehreren möglichen Annäherungsrichtungen an einen Stillstandsort auch nach den Annäherungsrichtungen differenziert werden.

Weiterhin können die Stillstandszeiten bei mehreren Möglichkeiten einer Weiterfahrt vom Stillstandsort aus, beispielsweise an Kreuzungen oder Einmündungen, auch in Abhängigkeit einer Richtung der Weiterfahrt differenziert und entsprechend abgespeichert werden. Dem liegt die Erkenntnis zugrunde, dass "Grün-Phasen" an Ampelanlagen für links abbiegenden Verkehr häufig erheblich verschieden von "Grün-Phasen" für rechts abbiegenden oder geradeaus fahrenden Verkehr gesteuert sein können. Inbesondere diese Möglichkeit kommt insbesondere in Verbindung mit einem Navigationssystem als Assistenzsystem bei aktiver Zielführung in Betracht, weil dann der Routenverlauf und damit auch die Richtung der Weiterfahrt vom Stillstandsort aus bekannt ist.

Die Erfassung der Informationen ist nicht auf ein Navigationssystem angewiesen, es genügt hier vielmehr eine Ortungsvorrichtung, beispielsweise auf Grundlage eines GPS-Satellitenempfängers oder dergleichen. Die Stillstandsorte können mittels der Ortungsvorrichtung festgestellt und in einem Speicher mit ihren Ortskoordinaten und ihren Stillstandszeiten abgelegt werden.

Die Erfindung kann vorteilhaft auch nachträglich als Programm-Update in ein existierendes Fahrerassistenzsystem, beispielsweise Fahrzeugnavigationssystem, integriert werden. Dazu ist vorteilhaft ein Datenspeicher, etwa in Form eines optischen, magnetischen, opto-magnetischen oder auch beispielsweise Halbleiterspeichers, vorgesehen, auf dem die dafür erforderlichen Programmroutinen abgespeichert sind.

### Zeichnungen

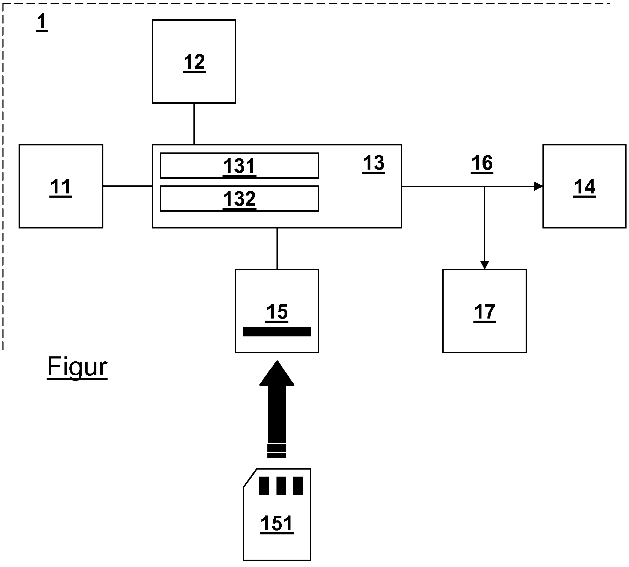

Ausführungsbeispiele der Erfindung sind in der Figur dargestellt und werden nachfolgend näher erläutert.

Die Figur zeigt ein vereinfachtes Blockschaltbild des erfindungswesentlichen eines erfindungsgemäßen Assistenzsystems zum Betrieb in einem Kraftfahrzeug.

### Beschreibung der Ausführungsbeispiele

Unter einem Kraftfahrzeug wird im Sinne der vorliegenden Erfindung ein mit einer Antriebsmaschine, wie Brennkraftmaschine, Elektromotor und andere unter Einsatz von Energie angetriebenes Fortbewegungsmittel, also auch ein Schiff, Flugzeug, Motorrad usw.

Ein Stillstandsort, an dem ein Stillstand für eine bestimmte Stillstandsdauer oder Wartedauer erforderlich wird, ist demnach nicht auf Straßen beschränkt, sondern kann im Falle eines Schiffs beispielsweise auch eine Hafeneinfahrt, eine Schleuse, im Falle eines Flugzeugs beispielsweise auch eine Anfahrt zu einer Rollbahn eines Flughafens oder dergleichen sein.

Dessen ungeachtet wird die Erfindung nachfolgend am Beispiel eines Assistenzsystems für einen Personenkraftwagen als vorteilhafter Ausführungsform beschrieben.

Das Assistenzsystem 1 umfasst eine Ortungsvorrichtung 11 zur Bestimmung seines aktuellen Standorts und damit des aktuellen Standorts eines Kraftfahrzeugs, in dem es betrieben wird. Das Assistenzsystem 1 umfasst weiterhin einen Speicher 12, in dem Orte und den Orten zugeordnete Attribute abgespeichert oder abspeicherbar sind sowie eine Steuerung 13 zur Steuerung der verschiedenen Funktionen des Assistenzsystems 1. Die Steuerung 13 ist unter anderem dazu ausgebildet, ein Signal 16 zu erzeugen, wenn eine Übereinstimmung des aktuellen, mit der Ortungsvorrichtung 11 ermittelten Fahrzeugstandorts mit einem im Speicher 12 abgelegten, über eine bestimmte Eigenschaft verfügenden Ort festgestellt wird. Dieses Signal 16 kann dazu genutzt werden, eine Information zu erzeugen, die an den Fahrzeugführer über Ausgabemittel 14, wie beispielsweise eine Anzeigevorrichtung als optische Information oder alternativ beispielsweise eine akustische Ausgabevorrichtung als beispielsweise eine synthetisierte Sprachinformation ausgegeben wird.

Das Assistenzsystem 1 kann vorteilhaft als Teil eines an sich bekannten Fahrzeugnavigationssystems, insbesondere als zusätzliches Programmmodul für ein herkömmliches Fahrtzeugnavigationssystem ausgeführt sein, wovon im Folgenden ausgegangen wird. Dies ist allerdings nicht als Beschränkung der Erfindung auf eine Realisierung der Erfindung in Verbindung mit einem Navigationssystem zu verstehen.

Die Ortungsvorrichtung 11 des Assistenzssystems 1 kann vorzugsweise in Form eines an sich bekannten Empfängers für Satellitensignale des GPS- oder eines vergleichbaren Satellitenortungssystems ausgebildet sein. Ein solcher GPS- oder vergleichbarer Empfänger ist regelmäßig Bestandteil heute üblicher Fahrzeugnavigationssysteme und ermöglicht eine Positionsbestimmung mit einem Fehler in der Größenordnung weniger Meter. Zur Verbesserung der Ortungsgenauigkeit können zusätzliche Sensoren, wie insbesondere Intertialsensoren, etwa Drehraten- oder Beschleunigungssensoren verwendet werden. Weiterhin kann die mit der genannten Sensorik ermittelte Position vorteilhaft auch mit Daten einer digitalen Straßenkarte, über die ein Fahrzeug-Navigationssystem zur Berechnung einer Fahrroute üblicherweise verfügt, abgeglichen und gegebenenfalls korrigiert werden.

Der Speicher 12 ist vorzugsweise als les- und beschreibbarer nichtflüchtiger Massenspeicher, beispielsweise als Flash-Halbleiter-Speicher, ausgeführt. Im Speicher 12 sind Orte, insbesondere in Form ihrer Ortskoordinaten, und den Orten zugeordnete Attribute abgelegt. Bei den den Orten zugeordneten Attributen handelt es sich insbesondere um Wartezeiten oder Stillstandszeiten für ein Fahrzeug an diesem Ort. Diese Zeitinformationen geben darüber Auskunft, wie lange eine übliche oder durchschnittliche Wartezeit eines Fahrzeugs an dem Ort ist, wenn dieser im Rahmen einer Fahrt des Fahrzeugs befahren wird. Orte mit solchen Wartezeiten sind typischerweise beispielsweise Straßen-Kreuzungen oder -Einmündungen, Lichtzeichen- bzw. Ampelanlagen, Bahnübergänge und dergleichen, an denen ein Fahrzeug zumindest in einer Vielzahl von Fällen im Laufe einer Fahrt zum Stillstand kommt und auch für mindestens eine bestimmte Zeitdauer stehen bleibt. Diese bestimmte Zeitdauer kann beispielsweise in der Größenordnung von etwa 10 Sekunden bis zu einigen Minuten liegen.

In vorteilhafter Ausgestaltung des Fahrerassistenzsystems 1 können im Speicher 12 Orten nicht nur einzelne Warte- oder Stillstandsdauern zugeordnet sein, sondern darüber hinaus bestimmten Orten auch verschiedene Warte- oder Stillstandsdauern zusätzlich in Abhängigkeit von einer Annäherungsrichtung an den Ort sowie zusätzlich auch in Abhängigkeit eines Fahrmanövers an dem Ort. So können beispielsweise durchschnittliche Wartedauern an Kreuzungen für Linkasabbiegevorgänge typischerweise deutlich länger als für Geradeausfahrt oder Rechtsabbiegevorgänge sein, weil zusätzlich ein Gegenverkehr berücksichtigt werden muss. Ampelanlagen sind weisen häufig für verschiedene Fahrrichtungen auch verschiedene Grün-Phasen und damit Wartezeiten auf, die nicht immer nur mit Gegenverkehr, sondern häufig auch mit einer Straßenauslastung und damit verkehrslenkenden Maßnahmen begründet sind.

In vorteilhafter Ausgestaltung der Erfindung können die Stillstands- oder Wartezeiten, die stillstandsrelevanten Orten zugeordnet sind, herstellerseitig im Speicher 12 abgelegt sein. Beispielsweise können für Lichtzeichenanlagen an Kreuzungen Wartezeiten von 45 Sekunden für Geradeausfahrt und Rechtsabbiegevorgänge, für Linksabbiegevorgänge beispielsweise 1 Minute, abgelegt sein. Diese herstellerseitig abgespeicherten Werte können vorzugsweise Erfahrungswerte sein, die an einer Vielzahl von gleichartigen Orten wie beispielsweise Kreuzungen mit Ampelanlagen einerseits und Bahnübergänge n andererseits, Gültigkeit haben.

In vorteilhafter Ausgestaltung der Erfindung ist weiter vorgesehen, dass das Assistenzsystem 1 während seines Betriebs im Fahrbetrieb des Fahrzeugs Stillstands- oder Wartezeiten automatisch erfasst und zuvor gespeicherte Werte unter Rückgriff auf neu erfasste Werte aktualisiert. Vorzugsweise ist dabei vorgesehen, dass die Aktualisierung ortsbezogen erfolgt, also für jeweils den Ort, zu dem eine Stillstands- oder Wartezeit erfasst wurde. Gemäß der zuvor beschriebenen vorteilhaften Ausführungsform kann darüber hinaus die Aktualisierung auch auf die einzelnen Annäherungsrichtungen und/oder Fahrmanöver für einen bestimmten Ort beschränkt werden. Es werden also vorzugsweise genau die Werte aktualisiert, zu denen neu erfasste Werte vorliegen.

Weiterhin kann auch vorgesehen sein, dass herstellerseitig keine Werte abgespeichert werden, sondern die Werte ausschließlich während Fahrten des Fahrzeugs bestimmt werden. Weiter kann auch vorgesehen sein, dass zu bestimmten Orten der Benutzer Wartezeiten über eine Benutzerschnittstelle selbst vorgeben oder auch vorliegende Werte entsprechend manuell korrigieren kann. Insbesondere für manuell korrigierte Werte kann ein Schreibschutz vorgesehen werden, der eine automatische Aktualisierung dieser Werte verhindert oder nur nach ausdrücklicher Autorisierung durch den Benutzer freigibt.

Ein Stillstand des Fahrzeugs ist dabei in an sich bekannter Weise ohne Weiteres aus den Signalen der Positionsbestimmungsmittel 11, alternativ aus einem Geschwindigkeitssignal des Tachometers oder dergleichen ableitbar. Die Wartezeit oder Stillstandsdauer an einem solchermaßen erkannten Halteort kann mittels einer durch die Erkennung des Stillstands gestarteten Stoppuhr bestimmt werden.

Zur Aktualisierung der Stillstands- oder Wartezeiten werden vorzugsweise an sich bekannte und daher hier nicht näher erläuterte statistische Methoden verwandt mit dem Ziel, möglichst genaue Informationen für typische oder durchschnittliche individuelle Stillstands- oder Wartezeiten für die einzelnen Orte abzuspeichern.

Bei Realisierung des Assistenzsystems 1 in Verbindung mit einem Fahrzeugnavigationssysstems kann weiterhin vorgesehen sein, dass im 12 lediglich Wartezeiten zu Orten und Verweise auf in einer digitalen Karte des Navigationssystems ohnhin vorliegende Ortsinformationen gespeichert sind. Eine digitale Karte enthält üblicherweise Ortsbezeichnungen und Ortskkordinaten. Der Verweis auf diese Ortskkordinaten im Speiche r 12 kann speichereffizienter sein als eine Ablage der Ortskoordinaten iom Speicher 12, da die Verweise auf die digitale Karte weniger Speicherkapazität benötigen als die Ortskoordinaten. Darüber hinaus sind die in der digtalen Kartenbasis vorliegenden Ortskoordinaten voraussichtlich genauer als die vom Assistenzsystem 1 automatisch ermittelten Ortskoordinaten. Damit können mit einer Fehlortung beim Betrieb des Assistenzsystems 1 verbundene Fehlfunktionen vermieden oder zumindest deren Risiko verrinert werden. Somit ergeben sich vorteilhafte Synergieeffekte bei Verbindung des Assistenzsystems mit einem Navigationssystem.

Die Steuerung 13 ist vorzugsweise in Form eines Rechners 131 oder Prozessors mit zugehörigem Arbeitsspeicher und Programmspeicher sowie einem Betriebsprogramm 132 ausgeführt, wie dies beispielsweise auch in Fahrzeugnavigationssystemen zum Einsatz kommt. Die Steuerung 13 ist unter anderem dazu ausgebildet, das Signal 16 zum Abstellen der Antriebsmaschine des Kraftfahrzeugs zu erzeugen, wenn eine Übereinstimmung des aktuellen, mit der Ortungsvorrichtung 11 ermittelten Fahrzeugstandorts mit einem im Speicher 12 abgelegten Ort festgestellt wird, zu dem eine Stillstands- oder Wartezeit abgespeichert ist. Die Erzeugung des Signals 16 kann vorzugsweise auf die Fälle beschränkt werden, in denen die gespeicherte Wartezeit zum aktuellen Ort einen bestimmten Schwellwert überschreitet. Dieser Schwellwert kann fest vorgegeben sein oder vom Benutzer über eine Benutzerschnittstelle vorgegeben werden. Weiter kann der Schwellwert auch automatisch ermittelt werden aus Informationen über einen Energieverbrauch oder Schadstoffausstoß im Leerlauf der Antriebsmaschine bei Fahrzeugstillstand sowie den entsprechenden Werten für ein erneutes Starten der Antriebsmaschine nach deren Abstellen. Vorteilhaft werden diese Werte für die beiden Fälle Abstellen und erneutes Starten der Antriebsmaschine bei Stillstand und Laufenlassen der Antriebsmaschine bei Fahrzeugstillstand verglichen. Erwartungsgemäß wird sich aber einer bestimmten Wartezeit eine Ersparnis durch das zwischenzeitliche Abstellen der Antriebsmaschine gegenüber einem Laufenlassen ergeben, welche bestimmte Wartezeit als Schwellwert zur Erzeugung des Signals 16 verwendet werden kann.

Vorzugsweise wird die Erzeugung des Signal 16 auch auf die Fälle beschränkt, in denen das Fahrzeug an einem gespeicherten Stillstandsort tatsächlich zum Stillstand kommt.

Das Signal 16 kann dazu verwendet werden, einen Hinweis zur Information des Benutzers zu erzeugen und an den Benutzer auszugeben, es handelt sich im Sinne der vorliegenden Erfindung also nicht zwingend um ein Steuersignal zur unmittelbaren Beeinflussung der Antriebsmaschine, sondern ein Signal zum Auslösen weiterer Funktionen, wie auch einer Hinweisausgabe. Der Hinweis kann in einer textuellen oder gesprochenen Empfehlung zum Abstellen der Antriebsmaschine bestehen, welche über entsprechende Ausgabemittel 14, also eine Anzeigevorrichtung beispielsweise im Armaturenbrett des Fahrzeugs oder ein Head-Up-Display oder dergleichen einerseits oder in Form eines synthetisierten Sprachhinweises über Lautsprecher, insbesondere ohnehin vorhandene Lautsprecher einer Audioanlage im Fahrzeug, ausgegeben wird. Ein optischer Hinweis kann auch darin bestehen, dass in einer auf einem Display dargestellten Straßenkarte, die den Fahrzeugstandort umfasst, der Halteort in einer bestimmten Form, beispielsweise farblich hervorgehoben und entsprechend der Haltedauer in einer bestimmten Farbe, beispielsweise gelb für kurze haltezeit, rot für lange Haltezeit, dargestellt werden.

Das Signal 16 kann alternativ oder ergänzend auch zur Auslösung von Funktionen verwendet werden. Insbesondere kommt hier das automatische Abstellen einer Antriebsmaschine in Reaktion auf das Signal 16 in Betracht. Da bei heutigen Kraftfahrzeugen eine Brennkraftmaschine üblicherweise auch einen Bremskraftverstärker betreibt und somit für eine ausreichende Funktion der Betriebsbremse erforderlich ist, kann ergänzend vorgesehen sein, dass auch eine Feststellbremse oder eine Parkstellung eines automatischen Getriebes automatisch in Reaktion auf das Signal 16 betätigt wird.

Zur Aktualisierung oder Erweiterung des Betriebsprogramms 132 weist das Assistenzsystem 1 eine Schnittstelle 15 auf, über die Daten eingespielt werden können. Die Schnittstelle 15 kann als Steckanschluss, als Kartenleser für Flash-Speicherkarten, als Funkschnittstelle nach Mobiltelefonstandard wie GSM, GPRS, UMTS oder Kurzbereichsfunkstandard wie WLAN, Bluetooth oder dergleichen ausgebildet sein. Über die Schnittstelle können Programmmodule zur Aktualisierung oder Erweiterung der Funktionalität des bestehenden Assistenzsystems nach gängigen, aus der Computertechnik bekannte Verfahren eingespielt werden. Insbesondere kann ein Programmodul zur Durchführung des erfindungsgemäßen Verfahrens von einem Datenträger 151 in ein bestehendes herkömmliches Fahrzeug-Navigationssystem geladen werden, dessen Funktionsumfang somit somit zur Durchführung des erfindungsgemäßen Verfahrens erweitert wird.

## Patentansprüche

1. Assistenzsystem (1) für ein Kraftfahrzeug
mit Mitteln (13) zur Erzeugung eines Signals (16) in Abhängigkeit eines aktuellen Fahrzeugstandorts relativ zu einem Ort auf einer von dem Fahrzeug befahrenen Route, mit
einem Speicher (12), in dem Orten eines Verkehrswegenetzes Stillstandsdauern zugeordnet sind und mit
einer Ausbildung der Signalerzeugungsmittel (13) derart, dass diese ein Signal (16) zum Abstellen einer Antriebsmaschine (17) des Kraftfahrzeugs erzeugen, wenn der Fahrzeugstandort einen Ort des Verkehrswegenetzes erreicht, dem eine Stillstandsdauer zugeordnet ist, die über einem bestimmten Schwellwert liegt,
und mit einem Auswertemodul, welches dazu ausgebildet ist, während Fahrten des Kraftfahrzeugs Stillstände, Orte der Stillstände und Stillstandsdauern festzustellen und den Orten der Stillstände im Speicher (12) Stillstandsdauern zuzuordnen.

2. Assistenzsystem (1) nach Anspruch 1, **gekennzeichnet durch** Mittel (14) zur Ausgabe des Signals (16) an den Fahrzeugführer.

3. Assistenzsystem (1) nach einem der Ansprüche 1 oder 2, **gekennzeichnet durch** Mittel zum Abstellen der Antriebsmaschine (17) des Kraftfahrzeugs in Reaktion auf das Signal (16).

4. Assistenzsystem (1) nach Anspruch 1, **dadurch gekennzeichnet, dass** das Auswertemodul weiter dazu ausgebildet, im Speicher (12) Orten zugeordnete Stillstandsdauern zu aktualisieren.

5. Verfahren zur Erzeugung eines Signals (16) in einem Assistenzsystem (1) in einem Kraftfahrzeug in Abhängigkeit eines aktuellen Fahrzeugstandorts relativ zu einem Ort auf einer von dem Fahrzeug befahrenen Route, bei dem ein Signal (16)
zum Abstellen einer Antriebsmaschine (17) erzeugt wird, wenn der Fahrzeugstandort einen Ort des Verkehrswegenetzes erreicht, dem eine Stillstandsdauer zugeordnet ist, die über einem bestimmten Schwellwert liegt, und Stillstände des Fahrzeugs während Fahrten des Fahrzeugs hinsichtlich Ort des Stillstands und Dauer des Stillstands erfasst werden und dass den Orten des Verkehrswegenetzes zugeordnete, gespeicherte Stillstandsdauern unter Verwendung der
erfassten Informationen aktualisiert werden.

6. Verfahren nach Anspruch 5, **dadurch gekennzeichnet, dass** das Signal (16) zur Information an den Fahrzeugführer ausgegeben wird.

7. Verfahren nach Anspruch 5 oder 6, **dadurch gekennzeichnet, dass** in Reaktion auf das Signal (16) automatisch die Antriebsmaschine (17) des Kraftfahrzeugs abgestellt wird.

8. Datenträger (151) mit Programmcode (152) zur Durchführung des Verfahrens nach einem der vorhergehenden Verfahrensansprüche in einem Assistenzsystem (1) für ein Kraftfahrzeug.

## Claims

1. Assistance system,(1) for a motor vehicle comprising means (13) for generating a signal (16) in dependence on a current vehicle location relative to a location on a route travelled by the vehicle, comprising
a memory (12) in which standstill periods are allocated to locations of a traffic road network and comprising
a design of the signal generating means (13) in such a manner that they generate a signal (16) for stopping a drive engine (17) of the motor vehicle when the location of the vehicle reaches a location of the traffic road network to which a standstill period is allocated which is above a particular threshold value,
and comprising an evaluating module which is designed to determine standstills, location of the standstills and standstill periods during travels of the motor vehicle and to allocate standstill periods to the locations of the standstills in the memory (12).

2. Assistance system (1) according to Claim 1, **characterized by** means (14) for outputting the signal (16) to the vehicle driver.

3. Assistance system (1) according to one of Claims 1 or 2, **characterized by** means for stopping the drive engine (17) of the motor vehicle in response to the signal (16).

4. Assistance system (1) according to Claim 1, **characterized in that** the evaluating module is also designed to update standstill periods allocated to locations in the memory (12).

5. Method for generating a signal (16) in an assistance system (1) in a motor vehicle in dependence on a current vehicle location relative to a location on a route travelled by the vehicle in which a signal (16) for stopping a drive engine (17) is generated when the location of the vehicle reaches a location of the traffic road network to which a standstill period is allocated which is above a particular threshold value, and standstills of the vehicle are detected with respect to location of the standstill and duration of the standstill during travels of the vehicle and that stored standstill periods allocated to the locations of the road traffic network are updated by using the detected information.

6. Method according to Claim 5, **characterized in that** the signal (16) is output as information to the vehicle driver.

7. Method according to Claim 5 or 6, **characterized in that**, in response to the signal (16), the drive engine (17) of the motor vehicle is automatically stopped.

8. Data medium (151) with program code (152) for performing the method according to one of the preceding method claims in an assistance system (1) for a motor vehicle.

## Revendications

1. Système d'assistance (1) destiné à un véhicule automobile
comportant des moyens (13) pour générer un signal (16) en fonction d'un emplacement actuel du véhicule par rapport à un lieu sur un itinéraire parcouru par le véhicule, comportant
une mémoire (12) dans laquelle des durées d'arrêt sont affectées à des lieux d'un réseau de voies de communication et comportant
une forme de réalisation des moyens générateurs de signal (13) qui est telle que ceux-ci génèrent un signal (16) destiné à arrêter un moteur d'entraînement (17) du véhicule automobile lorsque l'emplacement du véhicule correspond à un lieu du réseau de voies de voies de communication auquel est associée une durée d'arrêt qui dépasse une valeur de seuil déterminée,
et comportant un module d'évaluation qui est conçu pour établir des arrêts, des lieux d'arrêt et des durées d'arrêt et pour associer des durées d'arrêt aux lieux des arrêts dans la mémoire (12) pendant la conduite du véhicule automobile.

2. Système d'assistance (1) selon la revendication 1, **caractérisé par** des moyens (14) pour délivrer le signal (16) à un conducteur du véhicule.

3. Système d'assistance (1) selon l'une quelconque des revendications 1 ou 2, **caractérisé par** des moyens pour l'arrêt du moteur d'entraînement (17) du véhicule automobile en réaction au signal (16).

4. Système d'assistance (1) selon la revendication 1, **caractérisé en ce que** le module d'évaluation est en outre conçu pour actualiser des durées d'arrêt associées à des lieux dans la mémoire (12).

5. Procédé pour la génération d'un signal (16) dans un système d'assistance (1) d'un véhicule automobile en fonction d'un emplacement actuel du véhicule par rapport à un lieu sur un itinéraire parcouru par le véhicule, dans lequel un signal (16) pour l'arrêt d'un moteur d'entraînement (17) est généré lorsque l'emplacement du véhicule correspond à un lieu du réseau de voies de communication auquel est affectée une durée d'arrêt qui dépasse une valeur de seuil déterminée, et des arrêts du véhicule sont détectés pendant la conduite du véhicule en ce qui concerne le lieu de l'arrêt et la durée de l'arrêt et en ce que des durées d'arrêt stockées et associées aux lieus du réseau de voies de communication sont actualisées en utilisant les informations détectées.

6. Procédé selon la revendication 5, **caractérisé en ce que** le signal (16) est délivré au conducteur du véhicule à titre d'information.

7. Procédé selon la revendication 5 ou 6, **caractérisé en ce que** le moteur d'entraînement (17) du véhicule automobile est automatiquement arrêté en réaction au signal (16).

8. Support de données (151) comportant un code de programme (152) destiné à mettre en oeuvre le procédé selon l'une quelconque des revendications de procédé précédentes dans un système d'assistance (1) destiné à un véhicule automobile.
